# EUROPÄISCHE PATENTANMELDUNG

(11) **EP 1 310 823 A1**
(43) Veröffentlichungstag der Anmeldung: **14.05.2003**
(21) Anmeldenummer: 02025238.3
(22) Anmeldetag: 12.11.2002
(51) Int. Cl.: G02F 1/15, B32B 17/10

(54) **Verfahren zum Herstellen eines lichtdurchlässigen Scheibenaufbaus für Fahrzeuge und lichtdurchlässiger Scheibenaufbau**

(30) Priorität: 12.11.2001 DE 10155168
(71) Anmelder: Webasto Systemkomponenten GmbH & Co. KG, 82131 Stockdorf (DE)
(72) Erfinder: Pätz, Werner, 86928 Hofstetten (DE); Teschner, Helmut, 86923 Finning (DE)
(74) Vertreter: Konnerth, Dieter Hans

(57) **Zusammenfassung**

Verfahren zum Herstellen eines lichtdurchlässigen Scheibenaufbaus für Fahrzeuge, insbesondere eines lichtdurchlässigen Deckels (1) für Fahrzeugdächer, bei dem sich unter einer Außenscheibe (2) ein mehrschichtiges elektrochromes Element (3) zum Beeinflussen der Lichtdurchlässigkeit des Scheibenaufbaus befindet. Bei dem erfindungsgemäßen Verfahren wird die Innenseite der Außenscheibe mit einem kompletten funktionsfähigen Elektrochrompaket (3) beschichtet. Des weiteren wird ein nach diesem Verfahren hergestellter lichtdurchlässiger Scheibenaufbau angegeben.

## Beschreibung

Die Erfindung betrifft ein Verfahren zum Herstellen eines lichtdurchlässigen Scheibenaufbaus für Fahrzeuge, insbesondere eines lichtdurchlässigen Deckels für Fahrzeugdächer, bei dem sich unter einer Außenscheibe ein mehrschichtiges elektrochromes Element zum Beeinflussen der Lichtdurchlässigkeit des Scheibenaufbaus befindet, sowie einen lichtdurchlässigen Scheibenaufbau.

Ein Verfahren dieser Art ist aus der DE 196 30 813 A1 bekannt. Bei dem bekannten Verfahren werden zwecks Ausbildung des elektrochromen Elements die Innenseite einer gewölbten Außenscheibe aus Einscheibensicherheitsglas und die Außenseite einer entsprechend gewölbten Innenscheibe aus Kunststoff jeweils mit einer transparenten Elektrodenschicht und dann mit einer Redoxschicht beschichtet, worauf die beiden Scheiben zusammengefügt werden. Beim Verbindungsprozess wird der lonenspeicher des elektrochromen Elements eingefügt. Eine solche Vorgehensweise macht es notwendig, dass beide Scheiben den für ein Beschichten erforderlichen hohen Oberflächenreinheitsgrad aufweisen. In der Praxis bedeutet dies, dass bei der Herstellung Reinraumbedingungen herrschen müssen.

Der Erfindung liegt die Aufgabe zugrunde, ein gegenüber dem bekannten Verfahren vereinfachtes Verfahren zum Herstellen eines lichtdurchlässigen Scheibenaufbaus mit elektrochromem Element sowie einen solchen Scheibenaufbau bereitzustellen.

Diese Aufgabe wird erfindungsgemäß durch ein Verfahren mit den Merkmalen des Anspruchs 1 sowie durch einen lichtdurchlässigen Scheibenaufbau mit den Merkmalen des Anspruchs 12 gelöst. Somit wird bei dem Verfahren die Innenseite der Außenscheibe mit einem kompletten funktionsfähigen Elektrochrompaket, das heißt einem Paket an sich bekannter Art mit transparenten Elektrodenschichten, Redoxschichten und transparentem Elektrolyt, beschichtet.

Das Verfahren bzw. der lichtdurchlässige Scheibenaufbau nach der Erfindung kommt im Gegensatz zu dem bekannten Zweischeibenaufbau mit einer einzigen Scheibe, vorzugsweise einer thermisch vorgespannten Glasscheibe, aus. Dadurch bedarf es keiner Glassonderfertigung mit entsprechenden zusätzlichen Werkzeugkosten. Beschichtungsvorgänge erfolgen nur auf einem flächigen Bauteil. Nur für dieses eine flächige Bauteil muss dementsprechend der für ein Beschichten erforderliche hohe Oberflächenreinheitsgrad bereitgestellt werden. Demzufolge ist der erfindungsgemäße lichtdurchlässige Scheibenaufbau kostengünstiger zu fertigen.

Bevorzugte Ausgestaltungen der Erfindung ergeben sich aus den Unteransprüchen.

Insbesondere bei lichtdurchlässigen Deckeln für Fahrzeugdächer ist oft nicht die Gesamtfläche des Scheibenaufbaus, sondern beispielsweise nur ein größerer zentraler Bereich zur Durchsicht bestimmt. Vorzugsweise wird in solchen Fällen nur der zur Durchsicht bestimmte Bereich des Scheibenaufbaus mit dem Elektrochrompaket beschichtet.

Mindestens ein Teil der das Elektrochrompaket bildenden Schichten kann insbesondere durch Sputterprozesse auf der Innenseite der Außenscheibe aufgebaut werden. Als Außenscheibe kann dabei vorteilhaft eine Glasscheibe verwendet werden, die thermisch vorgespannt und somit gehärtet wird, so daß sie Einscheiben-Sicherheitsglas (ESG) mit seinen bewährten Sicherheitseigenschaften bildet. Die Elektrochromschichten werden in einem solchen Fall nach dem Aufbringen keiner weiteren Temperaturbehandlung unterzogen, welche die Vorspanneigenschaften des Einscheiben-Sicherheitsglases verändern könnten. Der Dickenaufbau des lichtdurchlässigen Scheibenaufbaus kann in vorteilhafter Weise im wesentlichen demjenigen von herkömmlichen Einscheiben-Sicherheitsglas-Konstruktionen für Deckel von Fahrzeugdächern entsprechen.

Zum Schutz gegen Beschädigung aus dem Innenraum des Fahrzeugs wird vorzugsweise mindestens der zur Durchsicht bestimmte Bereich des Scheibenaufbaus nach Beschichten mit dem Elektrochrompaket innenseitig mit einer transparenten Kunststofffolie abgedeckt. Als Kunststofffolie kann dabei zweckmäßig eine Folie aus kratzfest beschichtetem Polyethylenterephthalat (PET) oder Polyester verwendet werden. Die PET-Folie oder die Polyesterfolie kann zweckmäßig mit Polyvinylbutyral (PVB), aliphatischem Polyurethan oder anderen transparenten Klebefolien auflaminiert werden. Es kann aber auch ein Gesamtfolienpaket verwendet werden, wie es beispielsweise von der Firma DuPont unter der Handelsbezeichnung "Spallshield"® und von der Firma Minnesota Mining & Manufacturing Company (3M) unter der Handelsbezeichnung "Scotchshield"® angeboten wird. Bei "Spallshield"® handelt es sich um einen mit einer kratzfesten Beschichtung versehenen Verbund aus Polyvinylbutyral- (PVB-) und Polyester- oder Polyethylenterephthalat-Filmen. "Scotchshield"® sind dünne, zähe und einreißfeste Polyesterfilme mit stoßfestem Klebstoffsystem.

Insbesondere wird eine solche Kunststofffolie gewählt, die aufgrund ihrer Materialeigenschaften eine Barriere gegen Feuchtigkeit und Wasserdampf bildet, so daß die Elektrochromschichten vor Kontakt mit Wasserdampf geschützt sind und dadurch eine längere Lebensdauer erhalten.

In weiterer Ausgestaltung der Erfindung können an der Innenseite der Außenscheibe außerhalb des zur Durchsicht bestimmten Bereichs des Scheibenaufbaus Solarzellen angeordnet werden. Solche Solarzellen können, wie in der DE 196 30 813 A1 erläutert, der Stromversorgung des Scheibenaufbaus und/oder einer Fahrzeugbatterie oder des Bordnetzes dienen, wobei die von den Solarzellen abgegebene Spannung so gewählt oder eingestellt werden kann, dass eine selbsttätige Anpassung der Lichtdurchlässigkeit des elektrochromen Elements in Abhängigkeit von der Sonneneinstrahlung erfolgt.

Die Solarzellen können insbesondere als Dünnschichtsolarzellen durch Beschichtungsvorgänge auf die Innenseite der Außenscheibe aufgebracht werden oder gemäß einer alternativen Gestaltung beim Auflaminieren der schützenden Kunststofffolie als kristalline Solarzellen zwischen der Innenseite der Außenscheibe und der Kunststofffolie eingebracht werden.

Elektrochrome Elemente sind an sich bekannt und werden daher hier nicht näher erläutert. Beispielsweise eignen sich unter anderem Elemente der in der DE 196 30 813 A1 beschriebenen Art, das heißt Elemente mit transparenten Elektroden aus Indium-Zinn-Oxid (ITO) und Redoxschichten mit einem reduktiv färbenden Werkstoff, wie WO₃, MoO₃, Nb₂O₅, V₂O₅ oder TiO₂, und/oder mit einem oxidativ färbenden Werkstoff, wie NiOₓ, IrOₓ, CoOₓ, Polyanilin, Polypyrrol oder Polythiophen.

Bei dem erfindungsgemäßen Scheibenaufbau ist es besonders vorteilhaft, wenn die Kunststofffolie das Elektrochrompaket und die Solarzellen überdeckt und randseitig in einer Umschäumung der Scheibe eingebettet ist, da bei dieser Gestaltung eine besonders dichte Abdeckung erzielt wird. Das vorgespannte, gehärtete Einscheiben-Sicherheitsglas bietet höchste Festigkeit bei einem vergleichsweise dünnen Scheibenaufbau.

Nachfolgend wird die Erfindung anhand eines Ausführungsbeispiels eines erfindungsgemäßen lichtdurchlässigen Scheibenaufbaus unter Bezugnahme auf eine Figur näher erläutert, die einen Querschnitt durch einen Randbereich des Scheibenaufbaus zeigt.

Der Scheibenaufbau ist beispielsweise ein Deckel 1 eines Fahrzeugdaches, der eine Glasscheibe 2 aus Einscheiben-Sicherheitsglas enthält, die thermisch vorgespannt und damit gehärtet ist. Die Glasscheibe 2 ist an ihrer Unter- oder Innenseite in einem zur Durchsicht der Glasscheibe 2 vorgesehenen Bereich mit elektrochromen Schichten 3, die ein Elektrochrompaket bilden, beschichtet.

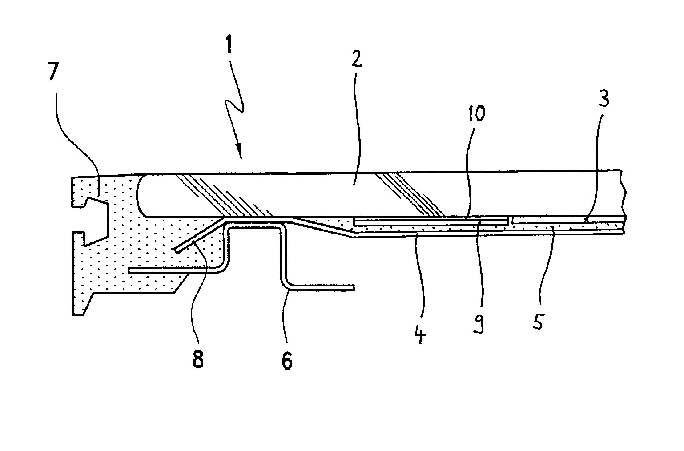

In dem nicht zur Durchsicht vorgesehenen Randbereich der Glasscheibe 2 sind kristalline Solarzellen 9 mittels einer Klebeschicht oder Klebefolie 10 auf der Innenseite der Glasscheibe 2 angebracht. Alternativ können die Solarzellen als Beschichtung direkt auf die Innenseite der Glasscheibe 2 aufgebracht werden, wobei dann die in der Figur dargestellte Klebefolie 10 entfällt.

Zum Schutz gegen Beschädigung aus dem Innenraum des Fahrzeugs ist des weiteren eine transparente Kunststofffolie 4 als Abdeckfolie, z. B. eine PET-Folie, auf den elektrochromen Schichten 3 bzw. dem Elektrochrompaket sowie den Solarzellen 9 mittels einer transparenten Klebefolie 5, z. B. einer Klebefolie aus Polyurethan, aufgebracht. Ein randseitig angeordnetes Deckelinnenblech 6, an dem Lager- oder Führungseinrichtungen für den Deckel 1 angreifen oder befestigt sein können, ist mittels einer umlaufenden Umschäumung 7, die z. B. aus Polyurethan hergestellt ist, befestigt. In der Umschäumung 7 ist auch ein Randstreifen 8 der Kunststofffolie 4 eingeschäumt. Die Kunststofffollie 4 dient als Wasserdampfbarriere und schützt sowohl die elektrochromen Schichten 3 wie auch die Solarzellen 9 und deren Anschlüsse durch die kontinuierlich übergreifende Abdeckung, wobei die randseitige Einschäumung der Kunststofffolie 4 ein seitliches Eindringen von Feuchtigkeit oder Wasserdampf zuverlässig verhindert.

### Bezugszeichenliste

- 1: Deckel
- 2: Glasscheibe
- 3: elektrochrome Schichten
- 4: Kunststofffolie
- 5: Klebefolie
- 6: Deckelinnenblech
- 7: Umschäumung
- 8: Randstreifen
- 9: Solarzellen
- 10: Klebeschicht

## Patentansprüche

1. Verfahren zum Herstellen eines lichtdurchlässigen Scheibenaufbaus für Fahrzeuge, insbesondere eines lichtdurchlässigen Deckels für Fahrzeugdächer, bei dem sich unter einer Außenscheibe ein mehrschichtiges elektrochromes Element zum Beeinflussen der Lichtdurchlässigkeit des Scheibenaufbaus befindet,
**dadurch gekennzeichnet, dass** die Innenseite der Außenscheibe (2) mit einem kompletten funktionsfähigen Elektrochrompaket (3) beschichtet wird.

2. Verfahren nach Anspruch 1,
**dadurch gekennzeichnet, dass** nur ein zur Durchsicht bestimmter Bereich des Scheibenaufbaus mit dem Elektrochrompaket (3) beschichtet wird.

3. Verfahren nach einem der vorhergehenden Ansprüche,
**dadurch gekennzeichnet, dass** mindestens ein Teil der das Elektrochrompaket bildenden Schichten (3) durch Sputterprozesse auf der Innenseite der Außenscheibe (2) aufgebaut wird.

4. Verfahren nach einem der vorhergehenden Ansprüche,
**dadurch gekennzeichnet, dass** als Außenscheibe (2) eine Glasscheibe verwendet wird, die thermisch vorgespannt wird.

5. Verfahren nach einem der vorhergehenden Ansprüche,
**dadurch gekennzeichnet, dass** mindestens der zur Durchsicht bestimmte Bereich des Scheibenaufbaus nach Beschichten mit dem Elektrochrompaket (3) innenseitig mit einer transparenten Kunststofffolie (4) abgedeckt wird.

6. Verfahren nach Anspruch 5,
**dadurch gekennzeichnet, dass** als Kunststofffolie (4) eine Folie aus kratzfest beschichtetem Polyethylenterephthalat (PET) oder Polyester verwendet wird.

7. Verfahren nach Anspruch 6,
**dadurch gekennzeichnet, dass** die Polyethylenterephthalat- (PET) oder Polyester-Folie mit Polyvinylbutyral (PVB), aliphatischem Polyurethan oder dergleichen transparenten Klebefolien (5) als Klebeschicht auflaminiert wird.

8. Verfahren nach Anspruch 5,
**dadurch gekennzeichnet, dass** als Kunststofffolie (4) ein mit einer kratzfesten Beschichtung versehener Verbund aus Polyvinylbutyral- (PVB-) und/oder Polyester- und/oder Polyurethanfilmen verwendet wird.

9. Verfahren nach einem der Ansprüche 2 bis 8,
**dadurch gekennzeichnet, dass** an der Innenseite der Außenscheibe (2) außerhalb des zur Durchsicht bestimmten Bereichs des Scheibenaufbaus Solarzellen (9) angeordnet werden.

10. Verfahren nach Anspruch 9,
**dadurch gekennzeichnet, dass** die Solarzellen als Dünnschichtsolarzellen durch Beschichtungsvorgänge auf die Innenseite der Außenscheibe (2) aufgebracht werden.

11. Verfahren nach Anspruch 9,
**dadurch gekennzeichnet, dass** die Solarzellen beim Auflaminieren der Kunststofffolie (4) als kristalline Solarzellen (9) zwischen der Innenseite der Außenscheibe (2) und der Kunststofffolie (4) eingebracht werden.

12. Lichtdurchlässiger Scheibenaufbau für Fahrzeuge, insbesondere lichtdurchlässiger Deckel für Fahrzeugdächer,
**dadurch gekennzeichnet, dass** der Scheibenaufbau eine Scheibe (2) enthält, an deren Innenseite ein komplettes mehrschichtiges Elektrochrompaket (3) zum Beeinflussen der Lichtdurchlässigkeit des Scheibenaufbaus angeordnet ist.

13. Scheibenaufbau nach Anspruch 12,
**dadurch gekennzeichnet, dass** an der Innenseite der Scheibe (2) außerhalb des zur Durchsicht bestimmten Bereichs des Scheibenaufbaus Solarzellen (9) angeordnet sind.

14. Scheibenaufbau nach Anspruch 12 oder 13,
**dadurch gekennzeichnet, dass** an mindestens dem zur Durchsicht bestimmten Bereich des Scheibenaufbaus auf das Elektrochrompaket (3) eine transparente Kunststofffolie (4) als Abdeckfolie aufgebracht ist.

15. Scheibenaufbau nach Anspruch 14,
**dadurch gekennzeichnet, dass** die Kunststofffolie (4) das Elektrochrompaket (3) und die Solarzellen (9) überdeckt und randseitig in einer Umschäumung (7) der Scheibe (2) eingebettet ist.

16. Scheibenaufbau nach Anspruch 14 oder 15,
**dadurch gekennzeichnet, dass** die transparente Kunststofffolie (4) mittels einer transparenten Klebefolie (5) auflaminiert ist.

17. Scheibenaufbau nach einem der Ansprüche 12 bis 16,
**dadurch gekennzeichnet, dass** die Scheibe (2) eine thermisch vorgespannte, gehärtete Glasscheibe ist.
